# EUROPÄISCHE PATENTSCHRIFT

(11) **EP 4 279 313 B1**
(45) Veröffentlichungstag und Bekanntmachung des Hinweises auf die Patenterteilung: **27.11.2024**
(21) Anmeldenummer: 23165862.6
(22) Anmeldetag: 31.03.2023
(51) Int. Cl.: B60K 35/00, B60R 13/00, B60K 37/00, B60K 13/02, B60R 13/02, B60K 37/20

(54) **BAUTEIL FÜR EIN FORTBEWEGUNGSMITTEL, SOWIE FORTBEWEGUNGSMITTEL**
COMPONENT FOR A MEANS OF TRANSPORTATION, AND MEANS OF TRANSPORTATION
COMPOSANT POUR UN MOYEN DE LOCOMOTION ET MOYEN DE LOCOMOTION

(30) Priorität: 20.05.2022 DE 102022205050
(43) Veröffentlichungstag der Anmeldung: 22.11.2023
(73) Patentinhaber: Continental Automotive Technologies GmbH, 30175 Hannover (DE)
(72) Erfinder: Koch, Marcus, 60488 Frankfurt am Main (DE)
(74) Vertreter: Continental Corporation

(56) Entgegenhaltungen:
- WO-A1-2017/097583
- DE-A1- 102014 221 505
- DE-C1- 4 227 528
- DE-C2- 4 217 177

## Beschreibung

Die vorliegende Erfindung betrifft ein Bauteil für ein Fortbewegungsmittel sowie ein Fortbewegungsmittel mit einem solchen Bauteil.

In modernen Kraftfahrzeugen werden zunehmend Anzeigevorrichtungen zur Darstellung von relevanten Fahrinformationen, zur Bedienung von Einrichtungen des Kraftfahrzeugs oder zur Wiedergabe von Medien genutzt. Diese Anzeigevorrichtungen sind typischerweise in der Armaturentafel angeordnet. Anzeigevorrichtungen für Fortbewegungsmittel benötigen für den Fall eines Unfalls einen Schutz vor Glasbruch, damit die Fahrzeuginsassen bei einem Kopf- oder Knieaufprall nicht durch Splitter oder scharfe Kanten verletzt werden. Entsprechendes gilt auch für andere bruch- oder splittergefährdete Komponenten, wie z.B. berührungsempfindliche Module mit Glasabdeckung. Zurzeit wird ein ausreichender Schutz der Fahrzeuginsassen vor scharfen Kanten und splitterndem Glas im Wesentlichen durch Airbags gewährleistet.

In diesem Zusammenhang beschreibt WO 2021/242558 A2 strukturelle Konstruktionslösungen für flexible Anzeigevorrichtungen zur Verwendung in Kraftfahrzeuginnenräumen. Die Anzeigevorrichtungen umfassen einen flexiblen Verbindungsabschnitt und sind so konfiguriert, dass sie die Anforderungen der in der Automobilindustrie üblichen Kopfaufschlagtests erfüllen. Eine weitere Anzeigevorrichtung nach dem Stand der Technik zeigt die WO 2017/097583 A1.

Aktuelle Gestaltungstrends, wie das nahtlose Design, bei dem benachbarte Komponenten fast spaltenfrei aneinander angrenzen und eine gemeinsame Oberfläche formen, führen dazu, dass es bei einem Unfall schnell zum Bruch von Glaselementen kommen kann. Insbesondere bei einem Seitenaufprall können benachbarte Anzeigevorrichtungen oder Deckelemente gegeneinanderstoßen.

Dies ist besonders dann der Fall, wenn sich die gemeinsame Oberfläche über die gesamte Breite des Fortbewegungsmittels erstreckt. Eine abgeschrägte Kante bei einer der beteiligten Komponenten hat in der Regel wenig Nutzen, da die Glasdicke nicht viel Spielraum für eine Abschrägung bietet. Eine abgeschrägte Kante würde zudem bei so dünnen Elementen zu scharfen Kanten führen.

Es ist eine Aufgabe der Erfindung, verbesserte Lösungen zum Schutz vor Glasbruch für den Fall eines Unfalls eines Fortbewegungsmittels bereitzustellen.

Diese Aufgabe wird durch ein Bauteil mit den Merkmalen des Anspruchs 1 und durch ein Fortbewegungsmittel gemäß Anspruch 10 gelöst. Bevorzugte Ausgestaltungen der Erfindung sind Gegenstand der abhängigen Ansprüche.

Gemäß einem ersten Aspekt der Erfindung weist ein Bauteil für ein Fortbewegungsmittel auf:
- ein Trägerelement;
- eine auf dem Trägerelement angeordnete Komponente; und
- ein auf dem Trägerelement angrenzend an die Komponente angeordnetes Deckelement;
wobei das Trägerelement einen Hebelmechanismus aufweist, der ausgestaltet ist, im Ansprechen auf eine parallel zu einer Oberfläche des Deckelements wirkende Kraft das Deckelement über eine Oberfläche der Komponente hinaus anzuheben.

Bei der erfindungsgemäßen Lösung ist das Trägerelement so gestaltet, dass im Falle eines Unfalls eine seitlich einwirkende Kraft bzw. die daraus resultierende Seitwärtsbewegung zu einer dazu senkrechten Bewegung der Kante des Deckelements gegenüber der angrenzenden Komponente führt. Auf diese Weise wird die bruchsichere Kante des Deckelements über und vorzugsweise auch vor eine empfindliche Glaskante der angrenzenden Komponente geschoben, so dass die beiden Kanten nicht aneinanderstoßen. Auf diese Weise wird das Risiko von Glasbruch reduziert und die Insassen werden damit besser vor Splittern geschützt.

Wenn das Deckelement die Glaskante der Komponente überlappt, versperrt es selbst für den Fall von Glasbruch den direkten Weg möglicher Splitter in den Fahrzeuginnenraum. Bei der Komponente kann es sich beispielsweise um eine Anzeigevorrichtung oder eine andere bruch- oder splittergefährdete Komponente handeln.

Gemäß einem Aspekt der Erfindung weist das Trägerelement einen Deformationsbereich auf. Ein solcher Deformationsbereich hat den Vorteil, dass durch die Verformung Energie des Unfalls aufgenommen wird und die Bewegung des Deckelements abgebremst wird.

Gemäß einem Aspekt der Erfindung ist das Deckelement in einem an die Komponente angrenzenden Bereich auf seiner Unterseite zum Rand hin abgeschrägt. Eine solche Abschrägung hat den Vorteil, dass sie ein Aufgleiten des Deckelements auf die Komponente bereits bei einem nur geringfügigen Anheben des Randbereichs des Deckelements über die Oberfläche der Komponente ermöglicht.

Gemäß einem Aspekt der Erfindung weist der Hebelmechanismus einen langen Hebelarmbereich, einen kurzen Hebelarmbereich und einen Anlenkbereich auf. Da bereits bei einer kleinen Seitwärtsbewegung eine relativ große Hebebewegung des Deckelements erzielt werden muss, werden unterschiedlich lange Hebelarmbereiche verwendet. Der Anlenkbereich dient dazu, eine Drehung der beiden Hebelarmbereiche auszulösen. Ein eventueller Deformationsbereich ist in diesem Fall vorzugsweise so ausgestaltet, dass die Verformung erst dann beginnt, wenn der lange Hebelarmbereich das Deckelement so weit angehoben hat, dass es ohne Kollision mit der Komponente über die Oberfläche der Komponente gleiten kann.

Gemäß einem Aspekt der Erfindung sind der kurze Hebelarmbereich und der Anlenkbereich durch einen Verbindungsbereich verbunden. Der Verbindungsbereich ist so ausgestaltet, dass er leichter verformbar ist als der kurze Hebelarmbereich und der Anlenkbereich, so dass die beiden Bereiche teilweise entkoppelt sind. Zu diesem Zweck kann z.B. die Dicke des Verbindungsbereichs kleiner sein als die Dicke des Anlenkbereichs und die Dicke des kurzen Hebelarmbereichs. Beim Anheben des Deckelements durch den Hebelmechanismus ändert sich der Winkel des kurzen Hebelarmbereichs relativ zur einwirkenden Kraft, was durch den Verbindungsbereich ausgeglichen wird. Zusätzlich kann der Verbindungsbereich als Sollbruchstelle ausgestaltet sein, bei der es bei fortdauernder Krafteinwirkung zum Bruch kommt, wenn das Deckelement ausreichend angehoben wurde.

Gemäß einem Aspekt der Erfindung ist das Trägerelement einstückig ausgestaltet. Die einstückige Ausgestaltung hat den Vorteil, dass eine kostengünstige Herstellung des Trägerelements ermöglicht wird. Insbesondere ist keine Montage einzelner Elemente des Trägerelements erforderlich. Die einstückige Ausgestaltung kann beispielsweise durch eine geeignete Formgebung des Trägerelements erreicht werden. Diese ermöglicht auch die Verwendung von Materialien auf Magnesiumbasis für das Trägerelement. Magnesium ist besonders leicht, aber dennoch stabil genug, um insbesondere auch eine großflächige Komponente tragen zu können. Natürlich können auch andere Materialen für das Trägerelement genutzt werden.

Gemäß einem Aspekt der Erfindung ist der Hebelmechanismus durch Aussparungen des Trägerelements gebildet. Dies hat den Vorteil, dass der Hebelmechanismus realisiert werden kann, ohne dass zusätzliche Elemente am Trägerelement montiert werden müssen. Auf diese Weise lassen sich die Herstellungskosten für das Bauteil weiter reduzieren.

Gemäß einem Aspekt der Erfindung weist das Trägerelement zwei oder mehr Hebelmechanismen auf. Beispielsweise kann ein zweiter Hebelmechanismus dazu genutzt werden, eine gegenüber der Komponente abgewandte Seite des Deckelements unter die Ebene der Oberfläche der Komponente zu bewegen. Auf diese Weise wird ein gleicher Anstellwinkel des Deckelements gegenüber der Komponente bei auf mehrere Hebelmechanismen verteilter Funktion erzielt. Dies ist insbesondere bei beengten Platzverhältnissen vorteilhaft.

Gemäß einem Aspekt der Erfindung gehen die Oberfläche des Deckelements und die Oberfläche der Komponente im Wesentlichen nahtlos ineinander über. Unter im Wesentlichen nahtlos ist dabei zu verstehen, dass es zwischen den beiden Oberflächen keinen Sprung gibt und sich auch eine eventuelle Krümmung der Oberflächen gleichmäßig gestaltet. Allerdings kann sich zwischen den Oberflächen ein geringfügiger, schmaler Spalt befinden. Ein solcher Spalt hat vorzugsweise eine Breite von maximal 0,5 mm. Der im Wesentlichen nahtlose Übergang erlaubt es, das Bauteil im Rahmen eines nahtlosen Designs zu verwenden.

Ein erfindungsgemäßes Bauteil wird vorzugsweise in einem Fortbewegungsmittel eingesetzt, z.B. in Form einer Armaturentafel. Bei dem Fortbewegungsmittel kann es sich beispielsweise um ein Kraftfahrzeug handeln, alternativ aber auch um ein Luftfahrzeug, ein Schienenfahrzeug oder ein Wasserfahrzeug.

Weitere Merkmale der vorliegenden Erfindung werden aus der nachfolgenden Beschreibung und den angehängten Ansprüchen in Verbindung mit den Figuren ersichtlich.

### Figurenübersicht

- Fig. 1: zeigt schematisch eine Armaturentafel für ein Kraftfahrzeug;
- Fig. 2: veranschaulicht eine Beschädigung einer in einem herkömmlichen Bauteil verbauten Anzeigevorrichtung;
- Fig. 3: veranschaulicht die Vermeidung eine Beschädigung einer in einem erfindungsgemäßen Bauteil verbauten Anzeigevorrichtung;
- Fig. 4: zeigt schematisch einen einfachen Hebelmechanismus für ein erfindungsgemäßes Bauteil;
- Fig. 5: zeigt schematisch ein Trägerelement mit einem Hebelmechanismus;
- Fig. 6: zeigt schematisch ein erstes Ausführungsbeispiel eines Trägerelements mit zwei Hebelmechanismen;
- Fig. 7: zeigt schematisch ein zweites Ausführungsbeispiel eines Trägerelements mit zwei Hebelmechanismen;
- Fig. 8: zeigt schematisch eine Draufsicht auf ein Trägerelement mit mehreren Hebelmechanismen; und
- Fig. 9: zeigt schematisch ein Fortbewegungsmittel, das ein erfindungsgemäßes Bauteil nutzt.

### Figurenbeschreibung

Zum besseren Verständnis der Prinzipien der vorliegenden Erfindung werden nachfolgend Ausführungsformen der Erfindung anhand der Figuren detaillierter erläutert. Gleiche Bezugszeichen werden in den Figuren für gleiche oder gleichwirkende Elemente verwendet und nicht notwendigerweise zu jeder Figur erneut beschrieben.

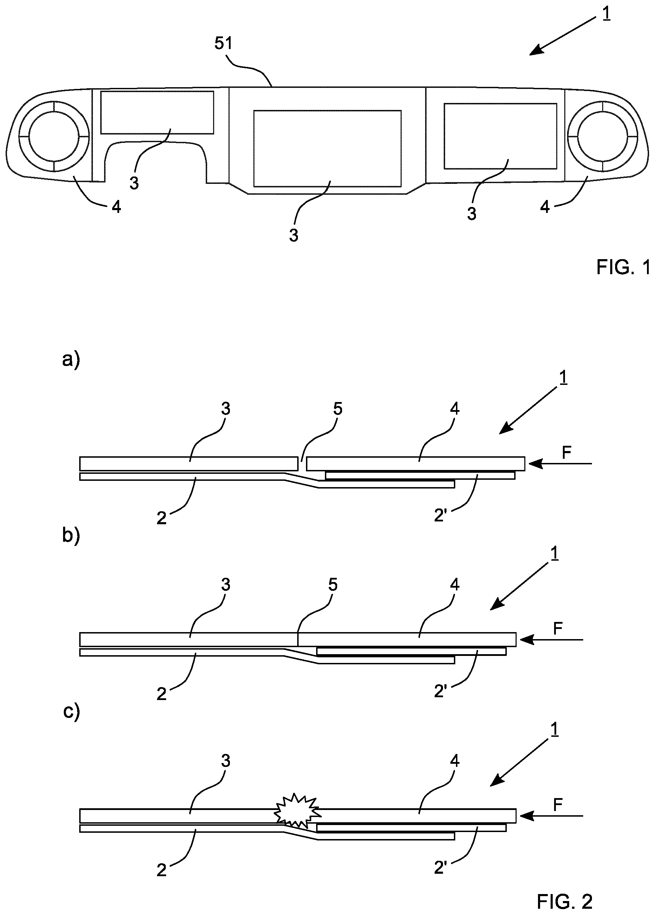

Fig. 1 zeigt schematisch eine Armaturentafel 51 für ein Kraftfahrzeug als Beispiel für ein Bauteil 1. Die Armaturentafel 51 ist so gestaltet, dass sie sich über die gesamte Breite des Kraftfahrzeugs erstreckt. Sie weist mehrere Anzeigevorrichtungen 3 sowie daran angrenzende Deckelemente 4 auf. Die Deckelemente 4 dienen in diesem Beispiel zugleich als Abdeckungen für Lüftungsdüsen. Die Anzeigevorrichtungen 3 und die Deckelemente 4 sind so angeordnet, dass sie fast spaltenfrei aneinander angrenzen und eine gemeinsame Oberfläche formen. Dies kann bei einem Unfall, insbesondere bei einem Seitenaufprall, schnell dazu führen, dass die Anzeigevorrichtungen 3 und die Deckelemente 4 gegeneinanderstoßen, so dass es zum Bruch von Glaselementen kommen kann. Die dabei entstehenden Splitter und scharfen Kanten stellen ein Verletzungsrisiko für die Fahrzeuginsassen dar. Entsprechendes gilt auch für andere bruch- oder splittergefährdete Komponenten, wie z.B. berührungsempfindliche Module mit Glasabdeckung.

Fig. 2 veranschaulicht eine Beschädigung einer in einem herkömmlichen Bauteil 1 verbauten Anzeigevorrichtung 3. Die Anzeigevorrichtung 3 ist auf einem Trägerelement 2, 2' angeordnet. Angrenzend an die Anzeigevorrichtung 3 ist ein Deckelement 4 auf dem Trägerelement 2, 2' angeordnet. In diesem Beispiel ist das Trägerelement 2, 2' aus zwei einzelnen Elementen gebildet. Zwischen der Anzeigevorrichtung 3 und dem Deckelement 4 befindet sich ein Spalt 5 mit einer Breite von in der Regel nicht mehr als 1 mm, bevorzugt weniger als 0,5 mm. In Folge eines Seitenaufpralls wird eine im Wesentlichen seitlich einwirkende Kraft F auf das Deckelement 4 ausgeübt. Dies ist in Fig. 2a) dargestellt. Die Kraft F führt zu einer Verschiebung des Deckelements 4 in Richtung der Anzeigevorrichtung 3, bis das Deckelement 4 schließlich gegen die Anzeigevorrichtung 3 stößt. Diese Situation ist in Fig. 2b) dargestellt. In Folge einer fortgesetzten seitlichen Krafteinwirkung kommt es schließlich zu einem Bruch der Anzeigevorrichtung 3, bei dem Glassplitter und scharfe Kanten entstehen können. Dies ist in Fig. 2c) dargestellt.

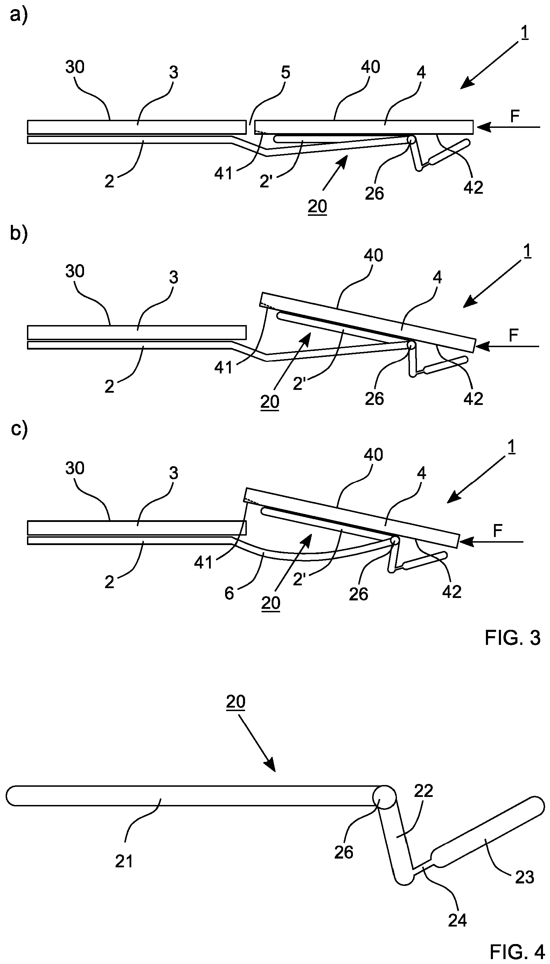

Fig. 3 veranschaulicht die Vermeidung eine Beschädigung einer in einem erfindungsgemäßen Bauteil 1 verbauten Anzeigevorrichtung 3. Die Anzeigevorrichtung 3 ist auf einem Trägerelement 2, 2' angeordnet. Angrenzend an die Anzeigevorrichtung 3 ist ein Deckelement 4 auf dem Trägerelement 2, 2' angeordnet. Zwischen der Anzeigevorrichtung 3 und dem Deckelement 4 befindet sich ein Spalt 5 mit einer Breite von weniger als 1 mm, bevorzugt weniger als 0,5 mm. In Folge eines Seitenaufpralls wird eine im Wesentlichen seitlich einwirkende Kraft F auf das Deckelement 4 ausgeübt. Dies ist in Fig. 3a) dargestellt. Das Trägerelement 2, 2' weist nun allerdings einen Hebelmechanismus 20 auf. Dieser ist ausgestaltet, im Ansprechen auf eine parallel zu einer Oberfläche 40 des Deckelements 4 wirkende Kraft das Deckelement 4 über eine Oberfläche 30 der Anzeigevorrichtung 3 hinaus anzuheben. Wie in Fig. 3b) zu sehen ist, führt die Kraft F zunächst zu einer Drehung des Deckelements 4 um eine Drehachse 26. Dabei wird das Deckelement 4 so weit angehoben, dass es sich im weiteren Verlauf der Krafteinwirkung über die Anzeigevorrichtung 3 schieben kann, d.h. ein seitliches Anstoßen des Deckelements 4 gegen die Anzeigevorrichtung 3 wird vermieden. In Folge einer fortgesetzten seitlichen Krafteinwirkung kommt es schließlich zu einer Verformung des Trägerelements 2, 2' in einem Deformationsbereich 6. Dies ist in Fig. 3c) dargestellt. Sollte es nun doch noch zu einem Bruch der Anzeigevorrichtung 3 kommen, so versperrt das Deckelement 4 den direkten Weg möglicher Splitter in den Fahrzeuginnenraum. Wie in Fig. 3 angedeutet ist, kann das Deckelement 4 in einem an die Anzeigevorrichtung 3 angrenzenden Bereich 41 auf seiner Unterseite 42 zum Rand hin abgeschrägt sein. Dies hat den Vorteil, dass ein Aufgleiten des Deckelements 4 auf die Anzeigevorrichtung 3 bereits bei einem nur geringfügigen Anheben des Randbereichs 41 des Deckelements 4 über die Oberfläche 30 der Anzeigevorrichtung 3 ermöglicht wird.

Fig. 4 zeigt schematisch einen einfachen Hebelmechanismus 20 für ein erfindungsgemäßes Bauteil. Der Hebelmechanismus 20 weist einen langen Hebelarmbereich 21, einen kurzen Hebelarmbereich 22 und einen Anlenkbereich 23 auf. Die Dicke des Deckelements liegt in der Größenordnung von ca. 2 mm, wohingegen der Spalt zwischen dem Deckelement und der Anzeigevorrichtung eine Breite von vorzugsweise weniger als 0,5 mm hat. Daher muss bereits bei einer kleinen Seitwärtsbewegung des Deckelements eine relativ große Hebebewegung des erzielt werden. Zu diesem Zweck werden unterschiedlich lange Hebelarmbereiche 21, 22 verwendet, die in einem Winkel zueinander angeordnet sind, z.B. in einem Winkel zwischen 70° und 90°. Der Anlenkbereich 23 dient dazu, eine Drehung der beiden Hebelarmbereiche 21, 22 um eine Drehachse 26 auszulösen. Im gezeigten Beispiel sind der kurze Hebelarmbereich 22 und der Anlenkbereich 23 durch einen Verbindungsbereich 24 verbunden. Der Verbindungsbereich 24 ist so ausgestaltet, dass er leichter verformbar ist als der kurze Hebelarmbereich 22 und der Anlenkbereich 23. Dies sorgt dafür, dass die beiden Bereiche 22, 23 teilweise entkoppelt sind. Die Entkopplung kann z.B. erreicht werden, indem die Dicke des Verbindungsbereichs 24 kleiner ist als die Dicke des Anlenkbereichs 23 und die Dicke des kurzen Hebelarmbereichs 22. Darüber hinaus kann der Verbindungsbereich 24 als Sollbruchstelle ausgestaltet sein, bei der es bei fortdauernder Krafteinwirkung zum Bruch kommt, wenn das Deckelement ausreichend angehoben wurde.

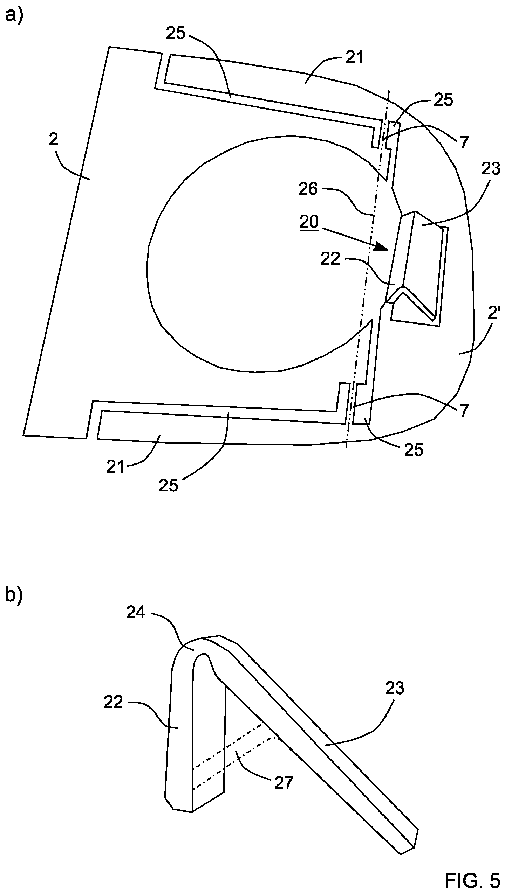

Fig. 5 zeigt schematisch ein Trägerelement 2, 2' mit einem Hebelmechanismus 20. Dabei ist in Fig. 5a) eine Draufsicht auf das Trägerelement 2, 2' dargestellt. Das Trägerelement 2, 2' besteht aus zwei Elementen, die mittels zweier Stege 7 miteinander verbunden sind. Die Stege 7 werden durch Aussparungen 25 des Trägerelements 2, 2' geformt und definieren eine Drehachse 26 für den Hebelmechanismus 20. Angeformt an das Trägerelement 2, 2' sind ein kurzer Hebelarmbereich 22 und ein Anlenkbereich 23. Ein Teil des Trägerelements 2, 2' dient als langer Hebelarmbereich 21. Bei der Montage wird das Deckelement lediglich auf dem beweglichen zweiten Element 2' des Trägerelements 2, 2' befestigt, so dass es gegenüber dem starren ersten Element 2 des Trägerelements 2, 2' angehoben werden kann. Fig. 5b) zeigt eine Detailansicht des kurzen Hebelarmbereichs 22 und des Anlenkbereichs 23. Die beiden Bereiche 22, 23 sind durch einen Verbindungsbereich 24 mit verringerter Dicke verbunden, der den kurzen Hebelarmbereich 22 und den Anlenkbereich 23 teilweise entkoppelt. Bei Bedarf kann aber eine zusätzliche Verstärkung 27 vorgesehen sein.

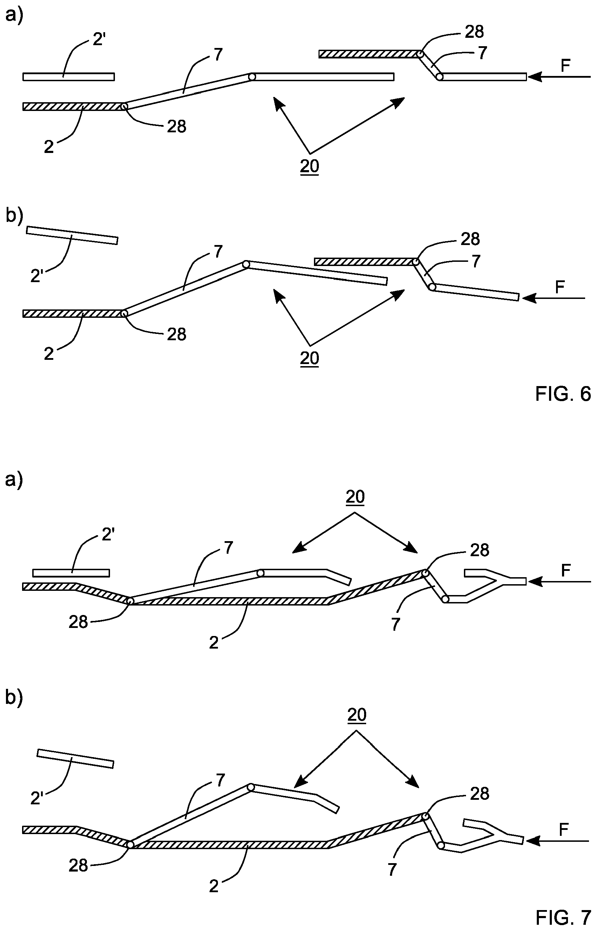

Fig. 6 zeigt schematisch ein erstes Ausführungsbeispiel eines Trägerelements 2, 2' mit zwei Hebelmechanismen 20. Das Trägerelement 2, 2' besteht auch bei dieser Ausführungsform aus zwei miteinander verbundenen Elementen, d.h. einem starren ersten Element 2 und einem demgegenüber beweglichen zweiten Element 2'. Die beiden Elemente des Trägerelement 2, 2' sind durch Stege 7 beweglich miteinander verbunden, die an Fixpunkten 28 des ersten Elements 2 des Trägerelements 2, 2' fixiert sind und Bestandteil der Hebelmechanismen 20 sind. Bei der Montage wird das Deckelement lediglich auf dem beweglichen zweiten Element 2' des Trägerelements 2, 2' befestigt, so dass es gegenüber dem starren ersten Element 2 des Trägerelements 2, 2' angehoben werden kann. Fig. 6a) zeigt die Situation zu Beginn einer seitlich einwirkenden Kraft F. Durch die Krafteinwirkung wird eine Drehung des beweglichen zweiten Elements 2' relativ zum starren ersten Element 2 des Trägerelements 2, 2' verursacht. Diese Drehung ist in Fig. 6b) dargestellt.

Fig. 7 zeigt schematisch ein zweites Ausführungsbeispiel eines Trägerelements 2, 2' mit zwei Hebelmechanismen 20. Das Trägerelement 2, 2' besteht auch bei dieser Ausführungsform aus zwei miteinander verbundenen Elementen, d.h. einem starren ersten Element 2 und einem demgegenüber beweglichen zweiten Element 2'. Die beiden Elemente des Trägerelement 2, 2' sind durch Stege 7 beweglich miteinander verbunden, die an Fixpunkten 28 des ersten Elements 2 des Trägerelements 2, 2' fixiert sind und Bestandteil der Hebelmechanismen 20 sind. Bei der Montage wird das Deckelement lediglich auf dem beweglichen zweiten Element 2' des Trägerelements 2, 2' befestigt, so dass es gegenüber dem starren ersten Element 2 des Trägerelements 2, 2' angehoben werden kann.

Fig. 7a) zeigt die Situation zu Beginn einer seitlich einwirkenden Kraft F. Durch die Krafteinwirkung wird eine Drehung des beweglichen zweiten Elements 2' relativ zum starren ersten Element 2 des Trägerelements 2, 2' verursacht. Diese Drehung ist in Fig. 7b) dargestellt.

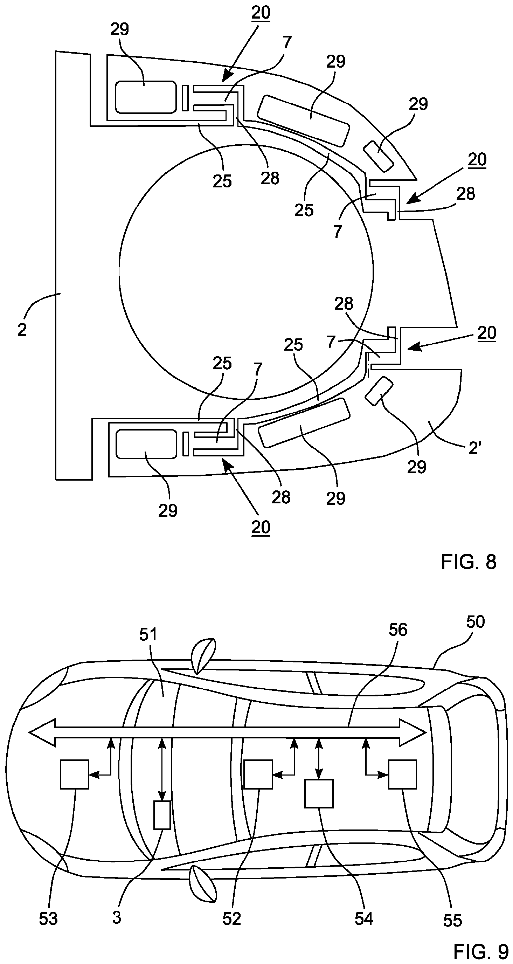

Fig. 8 zeigt schematisch eine Draufsicht auf ein Trägerelement 2, 2' mit mehreren Hebelmechanismen 20. Das Trägerelement 2, 2' besteht aus zwei Elementen, die mittels mehrerer Stege 7 miteinander verbunden sind. Die Stege 7 werden durch Aussparungen 25 des Trägerelements 2, 2' geformt, die an Fixpunkten 28 des ersten Elements 2 des Trägerelements 2, 2' fixiert sind und Bestandteil der Hebelmechanismen 20 sind. Bei der Montage wird das Deckelement lediglich auf dem beweglichen zweiten Element 2' des Trägerelements 2, 2' befestigt, so dass es gegenüber dem starren ersten Element 2 des Trägerelements 2, 2' angehoben werden kann. Zu diesem Zweck weist das bewegliche zweite Element 2' eine Anzahl von Klebebereichen 29 auf.

Fig. 9 zeigt schematisch ein Fortbewegungsmittel 50, das ein erfindungsgemäßes Bauteil nutzt. Bei dem Fortbewegungsmittel 50 handelt es sich in diesem Beispiel um ein Kraftfahrzeug, bei dem Bauteil um die Armaturentafel 51. Das Kraftfahrzeug weist eine Anzeigevorrichtung 3 auf, die in der Armaturentafel 51 angeordnet ist. Mit einer Sensorik 52 können Daten zur Fahrzeugumgebung erfasst werden. Die Sensorik 52 kann insbesondere Sensoren zur Umfelderkennung umfassen, z.B. Ultraschallsensoren, Laserscanner, Radarsensoren, Lidarsensoren oder Kameras. Die von der Sensorik 52 erfassten Informationen können genutzt werden, um anzuzeigende Inhalte für die Anzeigevorrichtung 3 zu generieren. Weitere Bestandteile des Kraftfahrzeugs sind in diesem Beispiel ein Navigationssystem 53, durch das Positionsinformationen bereitgestellt werden können, sowie eine Datenübertragungseinheit 54. Mittels der Datenübertragungseinheit 54 kann z.B. eine Verbindung zu einem Backend aufgebaut werden, beispielsweise um aktualisierte Software für Komponenten des Kraftfahrzeugs zu beziehen. Zur Speicherung von Daten ist ein Speicher 55 vorhanden. Der Datenaustausch zwischen den verschiedenen Komponenten des Kraftfahrzeugs erfolgt über ein Netzwerk 56.

### Bezugszeichenliste

- 1: Bauteil
- 2, 2`: Trägerelement
- 20: Hebelmechanismus
- 21: Langer Hebelarmbereich
- 22: Kurzer Hebelarmbereich
- 23: Anlenkbereich
- 24: Verbindungsbereich
- 25: Aussparung
- 26: Drehachse
- 27: Verstärkung
- 28: Fixpunkt
- 29: Klebebereich
- 3: Anzeigevorrichtung
- 30: Oberfläche der Anzeigevorrichtung
- 4: Deckelement
- 40: Oberfläche des Deckelements
- 41: Angrenzender Bereich
- 42: Unterseite
- 5: Spalt
- 6: Deformationsbereich
- 7: Steg
- 50: Fortbewegungsmittel
- 51: Armaturentafel
- 52: Sensorik
- 53: Navigationssystem
- 54: Datenübertragungseinheit
- 55: Speicher
- 56: Netzwerk
- F: Kraft

## Patentansprüche

1. Bauteil (1) für ein Fortbewegungsmittel (50), mit:
- einem Trägerelement (2, 2');
- einer auf dem Trägerelement (2, 2') angeordneten Komponente (3); und
- einem auf dem Trägerelement (2, 2') angrenzend an die Komponente (3) angeordneten Deckelement (4);
**dadurch gekennzeichnet, dass** das Trägerelement (2, 2') einen Hebelmechanismus (20) aufweist, der ausgestaltet ist, im Ansprechen auf eine parallel zu einer Oberfläche (40) des Deckelements (4) wirkende Kraft das Deckelement (4) über eine Oberfläche (30) der Komponente (3) hinaus anzuheben.

2. Bauteil (1) gemäß Anspruch 1, wobei das Trägerelement (2, 2') einen Deformationsbereich (6) aufweist.

3. Bauteil (1) gemäß Anspruch 1 oder 2, wobei das Deckelement (4) in einem an die Komponente (3) angrenzenden Bereich (41) auf seiner Unterseite (42) zum Rand hin abgeschrägt ist.

4. Bauteil (1) gemäß einem der vorherigen Ansprüche, wobei der Hebelmechanismus (20) einen langen Hebelarmbereich (21), einen kurzen Hebelarmbereich (22) und einen Anlenkbereich (23) aufweist.

5. Bauteil (1) gemäß Anspruch 4, wobei der kurze Hebelarmbereich (22) und der Anlenkbereich (23) durch einen Verbindungsbereich (24) verbunden sind.

6. Bauteil (1) gemäß einem der vorherigen Ansprüche, wobei das Trägerelement (2, 2') einstückig ausgestaltet ist.

7. Bauteil (1) gemäß Anspruch 6, wobei der Hebelmechanismus (20) durch Aussparungen (25) des Trägerelements (2, 2') gebildet ist.

8. Bauteil (1) gemäß einem der vorherigen Ansprüche, wobei das Trägerelement (2, 2') zwei oder mehr Hebelmechanismen (20) aufweist.

9. Bauteil (1) gemäß einem der vorherigen Ansprüche, wobei die Oberfläche (40) des Deckelements (4) und die Oberfläche (30) der Komponente (3) im Wesentlichen nahtlos ineinander übergehen.

10. Fortbewegungsmittel (50) mit einem Bauteil (1) gemäß einem der vorherigen Ansprüche.

## Claims

1. Structural part (1) for a transportation means (50), having:
- a support element (2, 2');
- a component (3) which is arranged on the support element (2, 2'); and
- a cover element (4) which is arranged on the support element (2, 2') so as to be adjacent to the component (3);
**characterized in that**
the support element (2, 2') has a lever mechanism (20) which is configured to lift the cover element (4) beyond a surface (30) of the component (3) in response to a force acting parallel to a surface (40) of the cover element (4).

2. Structural part (1) according to Claim 1, wherein the support element (2, 2') has a deformation region (6).

3. Structural part (1) according to Claim 1 or 2, wherein, in a region (41) adjacent to the component (3), the cover element (4) is bevelled towards the edge on its bottom side (42).

4. Structural part (1) according to one of the preceding claims, wherein the lever mechanism (20) has a long lever-arm region (21), a short lever-arm region (22) and an articulation region (23).

5. Structural part (1) according to Claim 4, wherein the short lever-arm region (22) and the articulation region (23) are connected by a connecting region (24).

6. Structural part (1) according to one of the preceding claims, wherein the support element (2, 2') is formed in one piece.

7. Structural part (1) according to Claim 6, wherein the lever mechanism (20) is formed by cutouts (25) of the support element (2, 2').

8. Structural part (1) according to one of the preceding claims, wherein the support element (2, 2') has two or more lever mechanisms (20).

9. Structural part (1) according to one of the preceding claims, wherein the surface (40) of the cover element (4) and the surface (30) of the component (3) merge into one another in an essentially seamless manner.

10. Transportation means (50) having a structural part (1) according to one of the preceding claims.

## Revendications

1. Composant (1) pour un moyen de locomotion (50), avec :
- un élément de support (2, 2') ;
- un composant (3) agencé sur l'élément de support (2, 2') ; et
- un élément de couverture (4) agencé sur l'élément de support (2, 2') de manière adjacente au composant (3) ;
**caractérisé en ce que**
l'élément de support (2, 2') présente un mécanisme de levier (20) qui est conçu pour soulever l'élément de couvercle (4) au-delà d'une surface (30) du composant (3) en réponse à une force agissant parallèlement à une surface (40) de l'élément de couvercle (4).

2. Composant (1) selon la revendication 1, dans lequel l'élément de support (2, 2') présente une zone de déformation (6).

3. Composant (1) selon la revendication 1 ou 2, dans lequel l'élément de couverture (4) est biseauté vers le bord sur son côté inférieur (42) dans une zone (41) adjacente au composant (3).

4. Composant (1) selon l'une quelconque des revendications précédentes, dans lequel le mécanisme de levier (20) présente une zone de bras de levier longue (21), une zone de bras de levier courte (22) et une zone d'articulation (23).

5. Composant (1) selon la revendication 4, dans lequel la zone de bras de levier courte (22) et la zone d'articulation (23) sont reliées par une zone de liaison (24).

6. Composant (1) selon l'une quelconque des revendications précédentes, dans lequel l'élément de support (2, 2') est conçu en une seule pièce.

7. Composant (1) selon la revendication 6, dans lequel le mécanisme de levier (20) est formé par des évidements (25) de l'élément de support (2, 2').

8. Composant (1) selon l'une quelconque des revendications précédentes, dans lequel l'élément de support (2, 2') présente deux mécanismes de levier (20) ou plus.

9. Composant (1) selon l'une quelconque des revendications précédentes, dans lequel la surface (40) de l'élément de couverture (4) et la surface (30) du composant (3) se fondent l'une dans l'autre essentiellement sans soudure.

10. Moyen de locomotion (50) avec un composant (1) selon l'une quelconque des revendications précédentes.
